(19) Europäisches Patentamt
European Patent Office
Office européen des brevets

(11) Veröffentlichungsnummer : **0 352 220 B1**

(12) # EUROPÄISCHE PATENTSCHRIFT

(45) Veröffentlichungstag der Patentschrift :
**21.07.93 Patentblatt 93/29**

(51) Int. Cl.$^5$ : **C22C 21/02,** C22F 3/00, C23C 26/02

(21) Anmeldenummer : **89810391.6**

(22) Anmeldetag : **25.05.89**

(54) **Oberflächenbeschichtung aus einer Aluminium-Basislegierung.**

(30) Priorität : **19.07.88 CH 2760/88**

(43) Veröffentlichungstag der Anmeldung :
**24.01.90 Patentblatt 90/04**

(45) Bekanntmachung des Hinweises auf die Patenterteilung :
**21.07.93 Patentblatt 93/29**

(84) Benannte Vertragsstaaten :
**AT BE DE ES FR GB IT LU NL SE**

(56) Entgegenhaltungen :
**EP-A- 0 170 963**
**EP-A- 0 221 276**
**EP-A- 0 273 547**
**WO-A-82/03813**
**US-A- 4 729 790**
**US-A- 4 747 884**
**PATENT ABSTRACTS OF JAPAN, Band 5, Nr. 20, 06 Februar 1981; Seite 154 C 42; & JP-A-55 148752 (Shin Nippon Seitetsu K.K.) 19-11-1980**

(56) Entgegenhaltungen :
**LASER TREATMENT OF MATERIALS, 1987, B.L. Mordike DGM Informationsgesellschaft Verlag; P.L. Antona et al.: "Laser surface remelting and alloying of aluminium alloys", Seiten 133-145**

(73) Patentinhaber : **GEBRÜDER SULZER AKTIENGESELLSCHAFT**
**Zürcherstrasse 9**
**CH-8401 Winterthur (CH)**

(72) Erfinder : **Pierantoni, Michel, Dr.-Ing.**
**Chemin de l'Orio 11**
**CH-1032 Romanel/sur Lausanne (CH)**
Erfinder : **Blank, Eberhard, Dr.rer.nat.**
**Bois de la Fontaine 7**
**CH-1007 Lausanne (CH)**
Erfinder : **Carrard, Michel, Dr.-Ing.**
**Rte d'Allamand**
**CH-1164 Bugeillon (CH)**
Erfinder : **Wagniere, Jean Daniel**
**Chemin Steinlen A 11**
**CH-1004 Lausanne (CH)**

EP 0 352 220 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Oberflächenbeschichtung aus einer Aluminium (Al)-Basislegierung zur Verbesserung der mechanischen und/oder chemischen Eigenschaften der Oberfläche eines metallischen Substrats, das zu mindestens 50 Gew.% aus Al besteht, wobei die Al-Basislegierung für die Oberflächenbeschichtung, neben mindestens 50 Gew.-% Al, 1 bis 25 Gew.-% Silizium (Si), sowie mindestens ein Element X aus der Reihe Eisen (Fe), Nickel (Ni,), Kobalt (Co) oder Mangan (Mn) in einer Gesamtkonzentration von 1 bis 35 Gew.-% enthält.

Aus der EP-B 95 604 ist ein Aluminium-Grundwerkstoff mit einer harten Oberflächenbeschichtung der vorstehend genannten Art bekannt. Diese Beschichtung hat den Zweck, die Härte der Substrat-Oberfläche bei hohen Temperaturen, beispielsweise bei Temperaturen über 300° C zu verbessern.

Weiterhin wird in dem Aufsatz "Laser Surface Remelting of Aluminium Alloy" von P.L.Antona u.a. in "Laser Treatment of Materials" edited by B.L.Mordike, DGM Informationsgesellschaft Verlag (1987), Seite 133, eine gleichartige Oberflächenbeschichtung auf einer Al-Basislegierung beschrieben.

In der EP-A-136 508 werden sehr ähnliche Al-Basis-Legierungen beschrieben, die ein mikroeutektische Mikrogefüge haben, welches den Gefügen der hier beschriebenen Oberflächenschichten ähnlich ist. Auf pulvermetallurgischem Wege werden daraus Gegenstände hergestellt, deren Gefüge in einer festen Al-Lösung intermetallische Ausscheidungen aufweisen, deren Abmessungen 100 nm in allen Richtungen nicht überschreiten. Die Pulver erhält man durch Zerkleinern von Metallbändern, welche nach dem melt-spinn-Verfahren durch rasche Erstarrung aus der Schmelze hergestellt werden. Ein Einsatz dieser Legierungen als Oberflächenbeschichtung von Al-Legierungen anderer Zusammensetzung ist nicht vorgesehen.

Ziel der vorliegenden Erfindung ist es, auf einem Substrat auf Al-Basis eine rissfreie, weitgehend glatte Oberflächenbeschichtung zu erzeugen, bei der die Härte bei Raumtemperatur und andere mechanische und/oder chemische Eigenschaften gegenüber denjenigen der bekannten Oberflächenbeschichtungen sprunghaft verbessert sind.

Eine Oberflächenbeschichtung nach der Erfindung ist dadurch gekennzeichnet, dass die Beschichtung eine maximale Schichtdicke von 0,5 mm hat und mindestens harte Bereiche enthält, die durch schnelle Erstarrung aus dem Schmelzzustand erstarrt sind, einen Oberflächenanteil von mindestens 50% besitzen und eine Mikrohärte aufweisen, deren Mindestwert in Abhängigkeit der Konzentration der Komponenten X bestimmt ist durch die Beziehung $HV\ 0{,}05 = 134 + 2{,}6 \,.\, C + 0{,}44 \,.\, C^2$, wobei C die Gesamtkonzentration der Komponenten X in der Oberflächenschicht in Gew.-% ist.

Diese Härten der Oberflächenbeschichtung werden mit einem Herstellungsverfahren erreicht, bei dem die Oberfläche des Substrates örtlich mit Hilfe eines Hochenergiestrahles aufgeschmolzen wird, wobei die geforderte Zusammensetzung der Schicht durch eine Vorbeschichtung mit mindestens einem Teil der Legierungselemente erzeugt wird, und der aufgeschmolzene Oberflächenbereich anschliessend zur raschen Erstarrung gebracht wird. Das neue Herstellungsverfahren ist dadurch gekennzeichnet, dass eine Erstarrungsgeschwindigkeit der aufgeschmolzenen Oberfläche von mindestens 30 mm/sec eingehalten wird.

Bevorzugte Ausführungsformen der Erfindung sind in den abhängigen Ansprüchen 2 bis 4 bzw. 6 bis 9 zu finden.

Die Erstarrungsgeschwindigkeit ist dabei in komplexer Weise von der Badgeometrie und der Vorschubgeschwindigkeit des Hochenergiestrahles abhängig und auf bekannte Weise errechenbar (siehe z.B.: M. Rappaz, M. Gremaud, R. Dekumbis, W. Kurz: "Solidification Front and Growth Rate During Laser Remelting" in "Laser Treatment of Materials", edited by B. L. Mordike, DGM Informationsgesellschaft Verlag (1987), Seite 43-53, Gleichung (1)).

Mechanische und chemische Eigenschaften der Substrat-Oberfläche lassen sich durch fakultative Zugabe mindestens eines der Elemente Magnesium, Zink, Titan, Vanadium, Chrom, Zirkonium, Niob, Molybdän, Cer, Yttrium und Kupfer erreichen, die in Konzentrationen bis zu 15 Gew.-% zugegeben werden können. Durch Zugabe eines oder mehrerer dieser Elemente kann die Härte der harten und der weniger harten Bereiche gesteigert und der Oberflächenanteil der harten Bereiche vergrössert werden.

Weiterhin kann es zweckmässig sein, wenn die Oberflächenbeschichtung maximal vier Elemente enthält.

Insbesondere die erzielten Härte-Werte lassen sich weiter verbessern, wenn das beschichtete Substrat einer Wärmebehandlung in einem Temperaturbereich zwischen 150° und 300° C unterzogen wird.

In Abhängigkeit von der beim Aufschmelzen durch den Hochenergiestrahl erzeugten "Badgrösse", relativ zum Ausgangsgefüge, kann es zweckmässig sein, die zu beschichtende Substratoberfläche vor der Vorbeschichtung einer gefügefeinenden Umschmelzbehandlung zu unterwerfen, um später in der beschichteten Oberfläche ein gleichmässiges Gefüge und eine möglichst gleichmässige chemische Zusammensetzung zu erhalten.

Im folgenden wird die Erfindung anhand von Ausführungsbeispielen näher erläutert.

Fig. 1 zeigt rein schematisch eine Möglichkeit für die Herstellung der Oberflächenbeschichtung;
Fig. 2 gibt in einem Diagramm die gemessenen HV 0,05-Werte in Abhängigkeit von der Konzentration C der Komponenten X wieder.

Auf eine Oberfläche eines Substrates 1, das aus einer AlSi-Gusslegierung mit 7 Gew.-% Si besteht, welche einen mittleren Sekundär-Dendritenabstand von etwa 25 µm aufweist, ist durch elektrolytische Ausscheidung eine Fe-Schicht 2 als Vorbeschichtung aufgebracht worden. Die Dicke d der Fe-Schicht 2 beträgt im nachfolgenden Beispiel etwa 6 µm. Die mit der Fe-Schicht 2 bedeckte Oberfläche des Substrates 1 wird nun mit Hilfe eines $CO_2$-Lasers 3 zur Bildung einer harten Oberflächenschicht 4 aus AlSi7Fe20 umgeschmolzen. Zu diesem Zweck wird der Laserstrahl 3, der eine Leistung von 500 W aufweist und in einer solchen Höhe über der zu behandelnden Oberfläche angeordnet ist, dass sein fokussierter Strahl auf dieser Oberfläche einen Durchmesser D von 0,24 mm aufweist, in mehreren Spuren 5 in x-Richtung relativ zum Substrat 1 bewegt.

Seine Vorschubgeschwindigkeit v, aus der - wie erwähnt - die Erstarrungsgeschwindigkeit der auf- oder umgeschmolzenen Zone berechnet werden kann, beträgt 0,16 m/sec. In negativer y-Richtung fortschreitend, sind die Spuren 5 jeweils um eine Schrittweite S gegeneinander versetzt, die etwa halb so gross ist wie die Breite B des aufgeschmolzenen Bereiches unter dem Laserstrahl 3. Auf diese Weise wird erreicht, dass die nebeneinander liegenden Spuren 5, von denen jede - wie in der Figur erkennbar - einen muldenförmigen "Aufschmelz"-Bereich erzeugt, eine Oberflächenbeschichtung mit mindestens annähernd konstanter Tiefe Z ergibt, die bei dem gezeigten Ausführungsbeispiel etwa 0,08 mm beträgt.

Jede Spur 5 besteht, wie in der Fig. 1 angedeutet, aus einem harten Kernbereich a, der im beschriebenen Beispiel am Rande von einem weniger harten Bereich b begrenzt ist; bei geeigneter Wahl der Zusammensetzung und der Herstellungsparameter kann die Oberflächenbeschichtung auch vollständig aus dem harten Bereich a bestehen. Nach der eingangs erwähnten Methode ergibt sich aus der Vorschubgeschwindigkeit v des Laserstrahls 3 eine Erstarrungsgeschwindigkeit für die aufgeschmolzene Oberflächenschicht von etwa 80 mm/sec. Die erstarrte Oberflächenschicht 4 zeigt sich rissfrei und hat bereits ohne glättende Nachbehandlungen eine hohe Oberflächengüte mit Mittenrauhwerten $R_a \leqq 0,5$ µm (DIN 4768/1).

Im Kernbereich a der einzelnen Spuren 5 werden nach der Laserbehandlung Härtewerte von 440 HV 0,05 gemessen (Messwert 10 im Diagramm der Fig. 2). Durch eine einstündige Wärmebehandlung des beschichteten Substrats 1 bei einer Temperatur von 220° C, von der das Substrat 1 durch Stehenlassen an ruhender Luft "heruntergekühlt" wird, lassen sich die erzielten Härtewerte nochmals steigern und ergeben 600 HV 0,05 (Messwert 11 in Fig. 2).

Auch beim zweiten Ausführungsbeispiel wird wiederum eine harte Oberflächenbeschichtung 4 auf dem gleichen $AlSi_7$-Substrat 1 erzeugt. Als härtendes Element X sind die 20 Gew.-% Fe jedoch durch 19 Gew.-% Ni ersetzt, das zunächst - in etwa gleicher Dicke wie das Fe im Beispiel 1 - wieder elektrolytisch auf der Substratoberfläche abgeschieden worden ist.

Es wird der gleiche Laserstrahl 3 wie beim Beispiel 1 eingesetzt; seine Parameter - Leistung, Fokus und Vorschubgeschwindigkeit v - bleiben unverändert. Nach der Laserbehandlung werden als Härte in den Kernbereich a der einzelnen Spuren 5 Werte von 360 HV 0,05 (Punkt 12 in Fig. 2) gemessen. Diese Werte werden durch eine Wärmebehandlung bei T = 190° C während zwei Stunden auf 430 HV 0,05 (Punkt 13) gesteigert.

Selbstverständlich ist die Herstellung der harten Oberflächenbeschichtung nicht an einen Laserstrahl als Hochenergiestrahl gebunden, sondern es kann dafür auch beispielsweise ein Elektronenstrahl verwendet werden. Weiterhin ist es auch möglich, für die Vorbeschichtung des Substrats mit in die Oberfläche einzubringenden zusätzlichen Elementen neben der vorherigen elektrolytischen Abscheidung, beispielsweise Aufdampfmethoden, thermisches Spritzen oder Laser cladding anzuwenden. Eine Vorbeschichtung durch galvanische Abscheidung hat den zusätzlichen Vorteil, dass sie eine glatte Oberfläche (Ra < 2µm; $R_Z$ < 14 µm (DIN 4768/1)) ergibt, was sich günstig auf die Rauhigkeit nach dem Umschmelzen durch den Hochenergiestrahl auswirkt.

Das Diagramm der Fig. 2 zeigt Messwerte für die Mikrohärten HV 0,05 der Kernbereiche a der Oberflächenbeschichtung in Abhängigkeit von der Konzentration C der Schicht-Komponenten X. Aenderungen der Konzentrationen C relativ zu denjenigen in den Beispielen 1 und 2 werden beispielsweise durch Variationen der Schichtdicken der elektrolytisch aufgetragenen Vorbeschichtungen aus Fe bzw. Ni erreicht; diese Dicken ändern sich dabei beispielsweise in einem Bereich zwischen 1 und 25 µm.

Mit Dreieck-Symbolen sind die gemessenen Mikrohärten für Fe als Komponente X wiedergegeben, wobei die "leeren" Dreiecke die Werte unmittelbar nach der Laserbehandlung und die "ausgefüllten" Dreiecke die Werte nach den für die Beispiele 1 bzw. 2 beschriebenen Wärmebehandlungen wiedergeben.

Mit Hohl- und Vollkreisen sind entsprechend die Härtewerte für Ni als Komponente X gezeigt.

Die in Fig. 2 eingetragene Kurve r gibt den Verlauf von HV 0,05 wieder, der sich aus der in Anspruch 1 erwähnten Formel errechnet.

## Patentansprüche

1. Oberflächenbeschichtung aus einer Aluminium (Al)-Basislegierung zur Verbesserung der mechanischen und/oder chemischen Eigenschaften der Oberfläche eines metallischen Substrats, das zu mindestens 50 Gew.% aus Al besteht, wobei die Al-Basislegierung für die Oberflächenbeschichtung, neben mindestens
   50 Gew.% Al,
   1 bis 25 Gew.% Silizium (Si), sowie
   mindestens ein Element X aus der Reihe Eisen (Fe), Nickel (Ni), Kobalt (Co) oder Mangan (Mn) in einer Gesamtkonzentration von 1 bis 35 Gew.%
   enthält, **dadurch gekennzeichnet, dass** die Beschichtung (4) eine maximale Schichtdicke von 0.5 mm hat und mindestens harte Bereiche (a) enthält, die durch schnelle Erstarrung aus dem Schmelzzustand erstarrt sind, einen Oberflächenanteil von mindestens 50% besitzen und eine Mikrohärte aufweisen, deren Mindestwert in Abhängigkeit der Konzentration (C) der Komponenten X bestimmt ist durch die Beziehung:
   $$HV\ 0.05 = 134 + 2{,}6 \,.\, C + 0{,}44 \,.\, C^2,$$
   wobei C die Gesamtkonzentration der Komponenten X in der Oberflächenschicht (4) in Gew.% ist.

2. Oberflächenbeschichtung nach Anspruch 1, **dadurch gekennzeichnet, dass** bei einer Oberflächenbeschichtung (4) auf Al-Basis zusätzlich mindestens eines der Elemente Magnesium (Mg), Zink (Zn), Titan (Ti), Vanadium (V), Chrom (Cr), Zirkonium (Zr), Niob (Nb), Molybdän (Mo), Cer (Ce), Yttrium (Y) und Kupfer (Cu) enthält, wobei (in Gew.%) folgende Konzentrationen zulässig sind:

| | | |
|---|---|---|
| Mg, Zn | je bis zu | 3 |
| Ti, V, Cr, Zr, Nb, Mo, Ce, Y, Cu | je bis zu | 15. |

3. Oberflächenbeschichtung nach einem der Ansprüche 1 oder 2, **dadurch gekennzeichnet, dass** in ihr maximal vier Elemente enthalten sind.

4. Oberflächenbeschichtung nach einem der Ansprüche 1 bis 3, dadurch gekennzeichnet, dass der obere Grenzwert ihrer Härte gegeben ist durch die Beziehung
   $$HV\ 0{,}05 = 780 - \exp(-\ 0{,}2 \,.\, C + 6{,}45)$$
   wobei C wiederum die Gesamtkonzentration der Komponenten X in Gew.% ist.

5. Verfahren zur Herstellung der Beschichtung nach Anspruch 1, durch örtliches Aufschmelzen der Oberfläche mit Hilfe eines Hochenergiestrahles, wobei die geforderte Zusammensetzung der Schicht durch eine Vorbeschichtung mit mindestens einem Teil der Legierungselemente erzeugt wird, und anschliessendes rasches Erstarren der aufgeschmolzenen Oberfläche, **dadurch gekennzeichnet, dass** eine Erstarrungsgeschwindigkeit der aufgeschmolzenen Oberfläche (5) von mindestens 30 mm/sec eingehalten wird.

6. Verfahren nach Anspruch 5, **dadurch gekennzeichnet, dass** die Erstarrungsgeschwindigkeit 50 bis 100 mm/sec beträgt.

7. Verfahren nach Anspruch 5 oder 6, **dadurch gekennzeichnet, dass** das beschichtete Substrat (1) einer Wärmebehandlung unterzogen wird.

8. Verfahren nach Anspruch 7, **dadurch gekennzeichnet, dass** die Wärmebehandlung im Temperaturbereich zwischen 150 und 300 °C durchgeführt wird.

9. Verfahren nach Anspruch 5, dadurch gekennzeichnet, dass die zu beschichtende Substraboberfläche vor der Vorbeschichtung einer gefügefeinenden Umschmelzbehandlung unterzogen wird.

## Claims

1. Surface coating of an aluminium (Al)-based alloy for improving the mechanical and/or chemical properties

of the surface of a metallic substrate, at least 50% by weight of which consists of Al, the Al-based alloy for the surface coating comprising, in addition to at least

50% by weight Al,

1 to 25% by weight silicon (Si) and

at least one element X from the iron (Fe), nickel (Ni), cobalt (Co) and manganese (Mn) series in a total concentration of

1 to 35% by weight,

characterised in that the coating (4) has a maximum layer thickness of 0.5 mm and comprises at least hard areas (a) which have solidified by rapid solidification from the molten state, at least 50% of which forms the surface and which have a microhardness whose minimum value is determined as a function of the concentration (C) of the constituents X by the relation:

$$HV\ 0.05 = 134 + 2.6 \cdot C + 0.44 \cdot C^2,$$

in which C is the total concentration of the constituents X in the surface layer (4) in % by weight.

2. Surface coating according to claim 1, characterised in that a surface coating (4) based on Al additionally comprises at least one of the elements magnesium (Mg), zinc (Zn), titanium (Ti), vanadium (V), chromium (Cr), zirconium (Zr), niobium (Nb), molybdenum (Mo), cerium (Ce), yttrium (Y) and copper (Cu), with the following concentrations (in % by weight) being permissible:

Mg, Zn in each case up to 3

Ti, V, Cr, Zr, Nb, Mo, Ce, Y, Cu in each case up to 15.

3. Surface coating according to claim 1 or 2, characterised in that it comprises a maximum of four elements.

4. Surface coating according to one of claims 1 to 3, characterised in that the upper limiting value of its hardness is given by the relation

$$HV\ 0.05 = 780 - \exp(-0.2 \cdot C + 6.45),$$

in which C is again the total concentration of the constituents X in % by weight.

5. Method for producing the coating according to claim 1 by local melting of the surface by means of a high-energy beam, the required composition of the layer being produced by pre-coating with at least some of the alloying elements and then rapidly solidifying the molten surface, characterised in that the molten surface (5) is solidified at a speed of at least 30 mm/sec.

6. Method according to claim 5, characterised in that the solidification speed is 50 to 100 mm/sec.

7. Method according to claim 5 or 6, characterised in that the coated substrate (1) is subjected to a heat treatment.

8. Method according to claim 7, characterised in that the heat treatment is carried out in the temperature range between 150 and 300°C.

9. Method according to claim 5, characterised in that the substrate surface to be coated is subjected to a structurally refining remelting treatment before the pre-coating operation.

## Revendications

1. Revêtement de surface à l'aide d'un alliage à base d'aluminium (Al) pour l'amélioration des caractéristiques mécaniques et/ou chimiques de la surface d'un substrat métallique qui se compose pour au moins 50% en poids d'Al, l'alliage à base d'Al destiné au revêtement de surface contenant, en plus d'au moins 50% en poids d'Al, de 1 à 25% en poids de silicium (Si) ainsi qu'au moins un élément X de la série fer (Fe), nickel (Ni), cobalt (Co) ou manganèse (Mn) en une concentration totale de 1 à 35% en poids, caractérisé en ce que le revêtement (4) est une couche ayant une épaisseur maximale de 0,5 mm et contenant au moins des zones dures (a) qui ont été solidifiées par solidification rapide à partir de l'état de fusion, qui occupent une proportion d'au moins 50 % de la surface et qui ont une microdureté dont la valeur minimale est déterminée en fonction de la concentration (C) du composant X par la relation :

$$HV\ 0,05 = 134 + 2,6 . C + 0,44 . C^2,$$

dans laquelle C est la concentration totale du composant X dans la couche superficielle (4) en % en poids.

2. Revêtement de surface selon la revendication 1, caractérisé en ce que, lorsque le revêtement (4) de surface est à base d'Al, il contient en plus au moins l'un des éléments magnésium (Mg), zinc (Zn), titane (Ti), vanadium (V), chrome (Cr), zirconium (Zr), niobium (Nb), molybdène (Mo), cérium (Ce), yttrium (Y) et cuivre (Cu), les concentrations suivantes (en % en poids) étant admissibles :

| | |
|---|---|
| Mg, Zn | chacun jusqu'à 3 |
| Ti, V, Cr, Zr, Nb, Mo, Ce, Y, Cu, | chacun jusqu'à 15. |

3. Revêtement de surface selon l'une des revendications 1 ou 2, caractérisé en ce qu'il contient au maximum quatre éléments.

4. Revêtement de surface selon l'une des revendications 1 à 3, caractérisé en ce que le seuil supérieur de sa dureté est donné par la relation

$$HV\ 0,05 = 780 - \exp(-0,2 . C + 6,45)$$

dans laquelle C est également la concentration totale du composant X en % en poids.

5. Procédé de production du revêtement selon la revendication 1, par mise en fusion locale de la surface à l'aide d'un faisceau à haute énergie, la composition exigée de la couche étant produite par une préenduction à l'aide d'au moins une partie des éléments d'alliage et ensuite par solidification rapide de la surface mise en fusion, caractérisé par le réglage d'une vitesse de solidification de la surface mise en fusion (5) d'au moins 30 mm/sec.

6. Procédé selon la revendication 5, caractérisé en ce que la vitesse de solidification est de 50 à 100 mm/sec.

7. Procédé selon la revendication 5 ou 6, caractérisé en ce que le substrat revêtu (1) est soumis à un traitement thermique.

8. Procédé selon la revendication 7, caractérisé en ce que le traitement thermique est effectué dans une plage de température comprise entre 150 et 300°C.

9. Procédé selon la revendication 5, caractérisé en ce que la surface du substrat devant être revêtue est soumise avant la préenduction à un traitement de remise en fusion d'affinage de la texture.

Fig.1

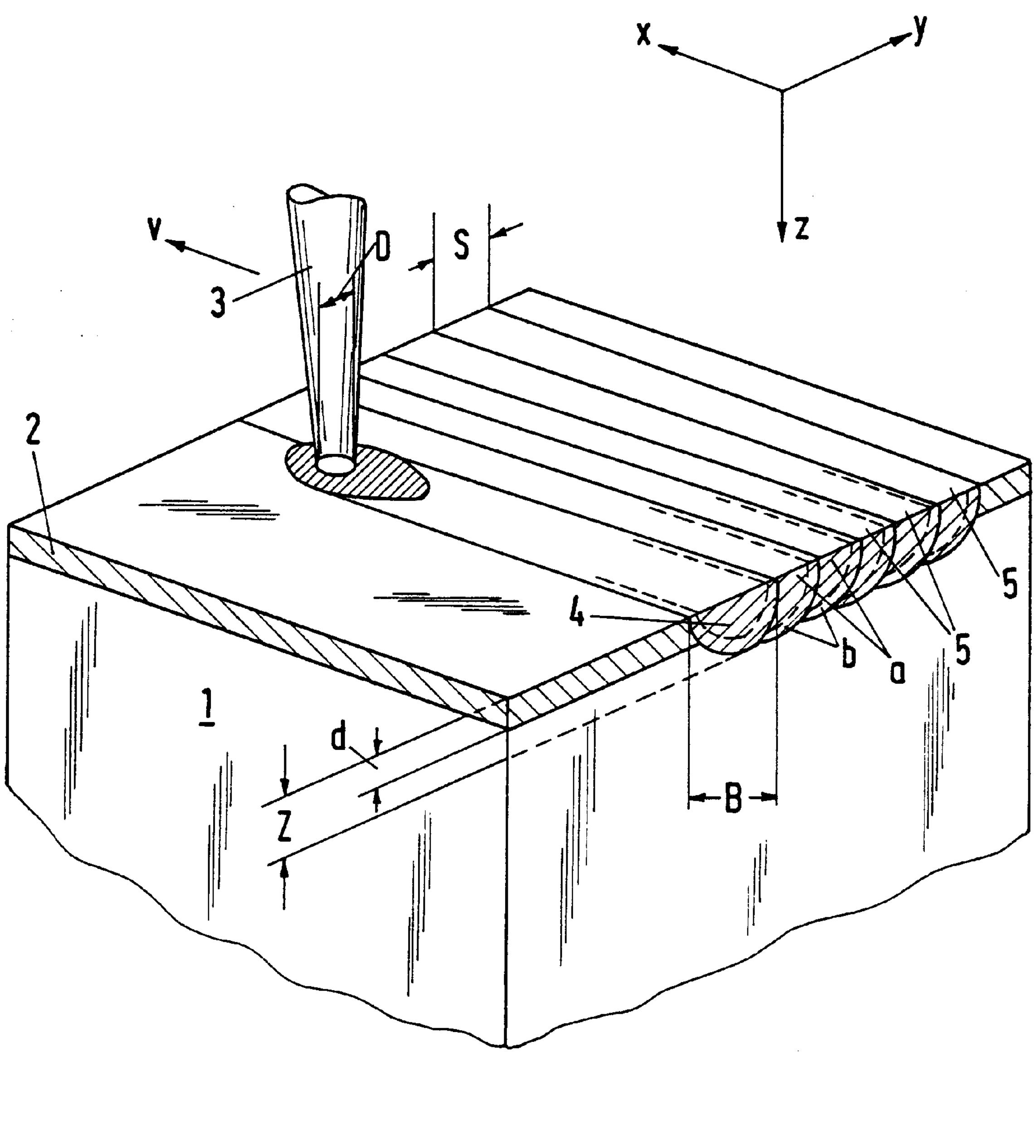

Fig.2

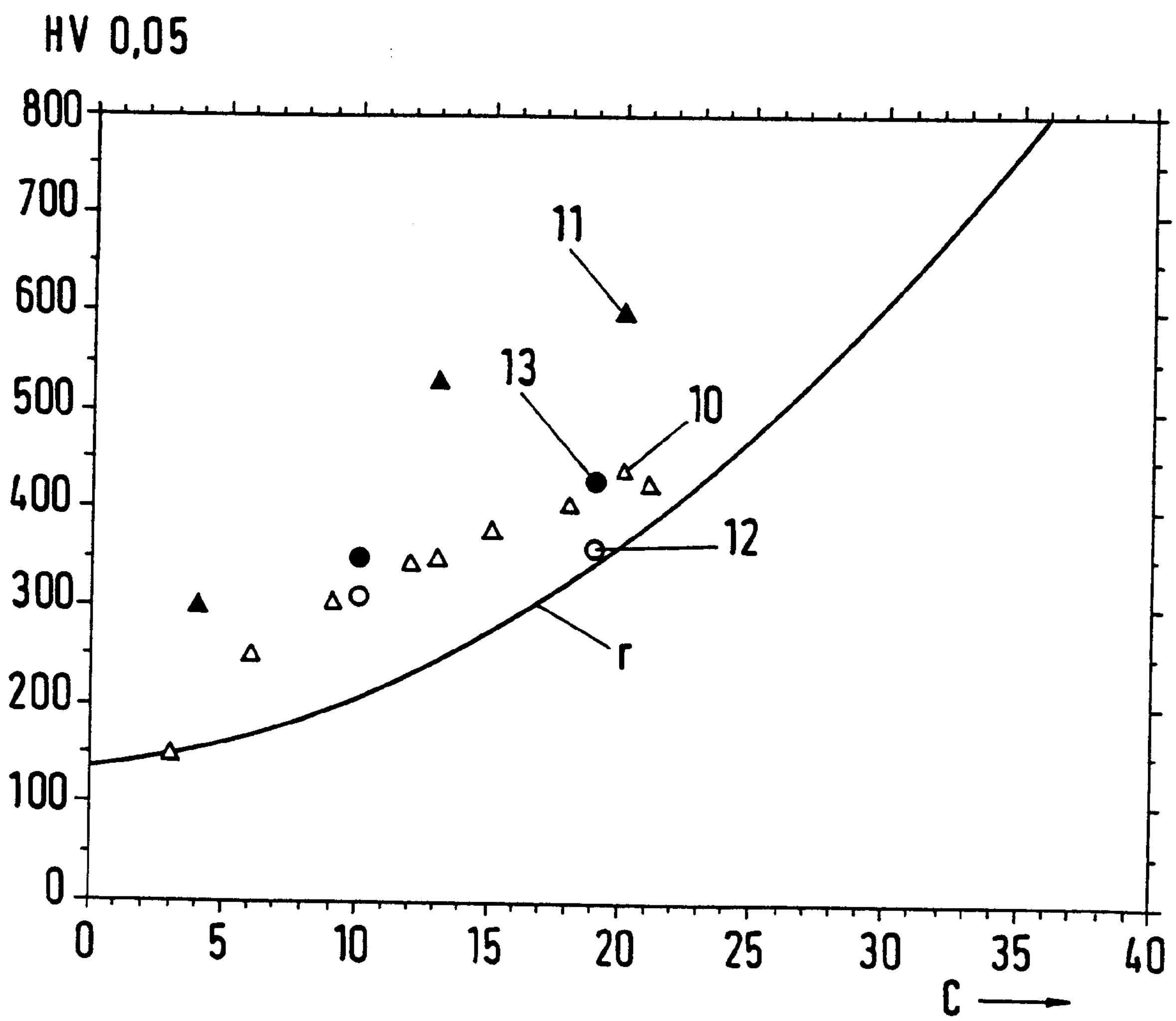
HV 0,05
800
700
600
500
400
300
200
100
0
0
5
10
15
20
25
30
35
40
C
11
13
10
12
r